# FASCICULE DE BREVET EUROPEEN

(11) **EP 0 506 198 B1**
(45) Date de publication et mention de la délivrance du brevet: **28.02.1996**
(21) Numéro de dépôt: 92200855.2
(22) Date de dépôt: 25.03.1992
(51) Int. Cl.: B65G 49/06, B65G 1/10

(54) **Elément-support mobile pour locaux de stockage de produits**
Mobiles Trageelement für Lagerräume
Movable support-element for storage rooms

(30) Priorité: 29.03.1991 IT VI910052
(43) Date de publication de la demande: 30.09.1992
(73) Titulaire: Piazza, Antonio, I-36015 Schio (Vicenza) (IT)
(72) Inventeur: Piazza, Antonio, I-36015 Schio (Vicenza) (IT)
(74) Mandataire: Bettello, Luigi, Dott. Ing.

(56) Documents cités:
- DE-A- 3 934 967
- FR-A- 2 138 272
- NL-A- 8 403 373
- US-A- 3 301 405

## Description

La présente invention amour objet un élément-support mobile propre à l'emmagasinage de produits, tels par exemple que des plaques de verre ou similaires. Un tel élément-support mobile est par exemple connu du document NL-A-8403 373. Les caractéristiques de cet état de la technique sont inclues dans le préambule de la revendication 1.

L'élément-support mobile suivant l'invention est défini dans la revendication 1.

Sur le dessin annexé :
Fig. 1 représente une première forme de réalisation de l'élément-support mobile suivant l'invention.
Fig. 2 et 3 illustrent deux variantes de réalisation d'un tel élément mobile.
Fig. 4 représente une série d'éléments-supports orientés parallèlement les uns aux autres pour constituer une partie du local de stockage suivant l'invention.

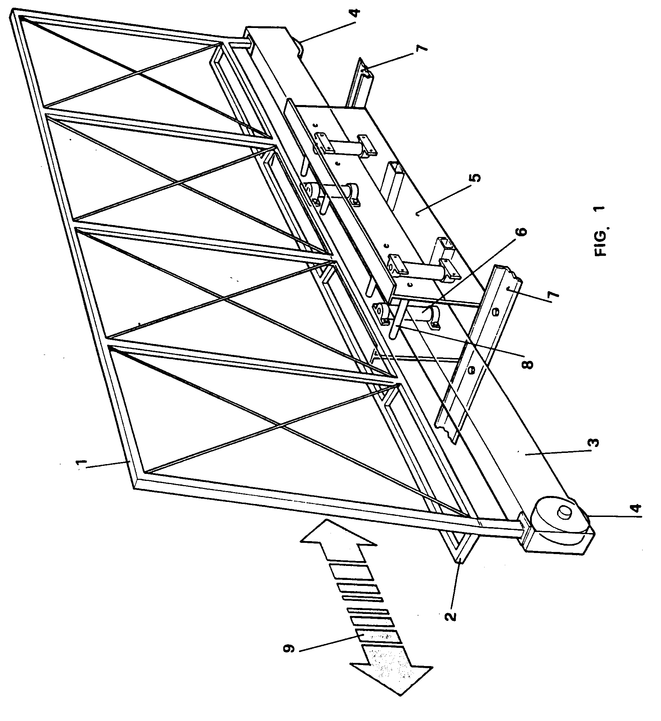

Comme on peut le voir en fig. 1, l'élément-support mobile 1, constitué par exemple par un bâti vertical à barreaux parallèles, est équipé d'une console inférieure d'appui 2, pour soutenir les objets à stocker, et est monté sur une poutre mobile 3, pourvue de roues 4 pour son déplacement sur le sol.

La poutre 3 est guidée à l'intérieur d'une structure comprenant deux profilés parallèles 5, entre les parois verticales desquelles sont montés les tambours tournants 6, prévus fous, qui assurent le guidage de la poutre 3 au cours de son déplacement longitudinal autorisé par les roues 4.

La structure qui supporte les tambours 6 comprend, ainsi qu'on l'a dit plus haut, les profilés 5 qui sont réunis entre eux par des poutrelles inférieures 7 et par des tirants d'écartement 8 qui rigidifient l'ensemble.

On comprend sans peine que le déplacement du bâti 1 peut être très aisément effectué suivant le sens indiqué par la flèche double 9, en vue de l'extraction ou au contraire de la remise en place de l'élément dans le local d'emmagasinage.

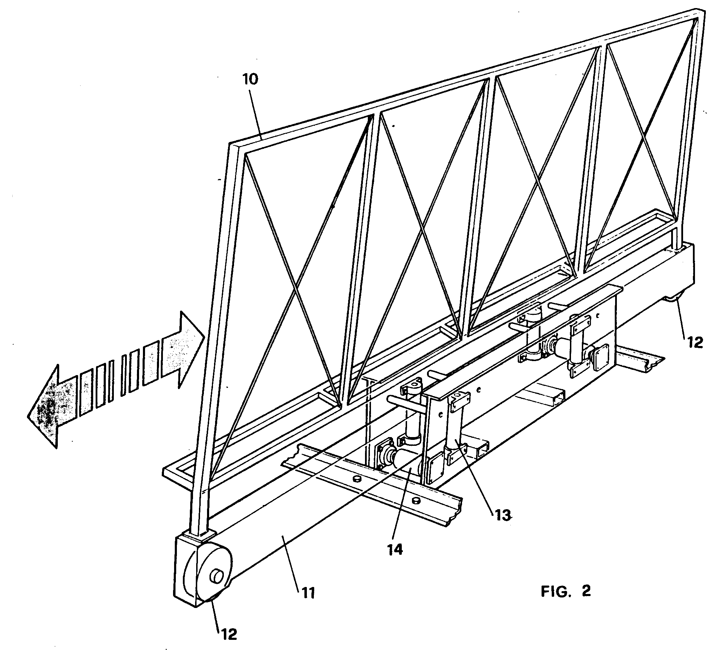

Dans la seconde forme de réalisation de l'invention telle qu'illustrée en fig. 2, l'élément-support mobile 10 comprend également une poutre 11 pourvue de roues 12 et guidée aussi bien par des tambours verticaux 13 prévus fous, que par des tambours horizontaux 14, également prévus fous, ces derniers supportant par le bas ladite poutre 11 en liaison avec les roues 12; cet agencement est surtout prévu pour des charges importantes.

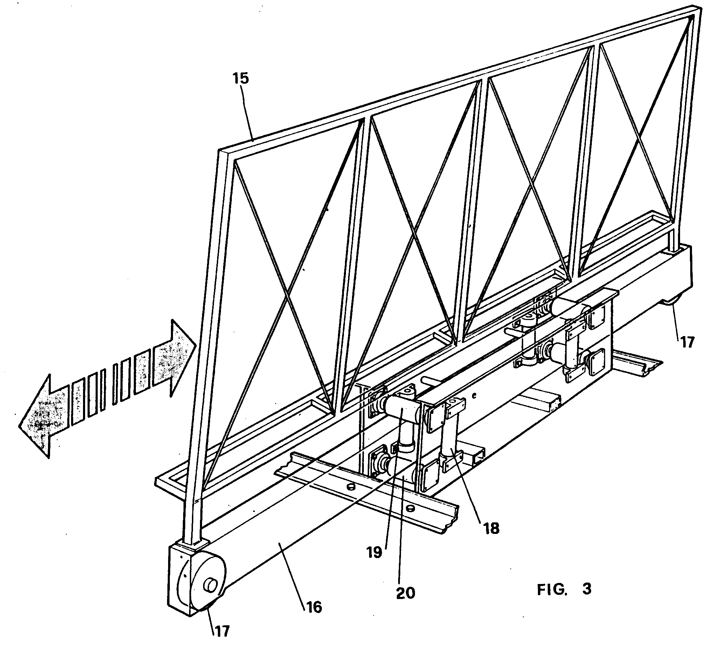

Dans la variante de réalisation suivant fig. 3, le bâti 15, toujours monté sur une poutre mobile 16 prenant appui sur le sol par des roues 17, est guidé entre les paires de tambours verticaux 18,et des tambours horizontaux 19 et 20, qui assurent le guidage de ladite poutre 16, aussi bien par le bas que par le haut. Cette structure est préfèrable lorsque l'on a affaire à des charges encore plus importantes, qui sont de nature à subir des déplacements verticaux sur le châssis 15.

Bien évidemment, on peut imaginer d'autres formes de réalisation particulières, comprenant par exemple des paires de tambours de guidage en nombre différent.

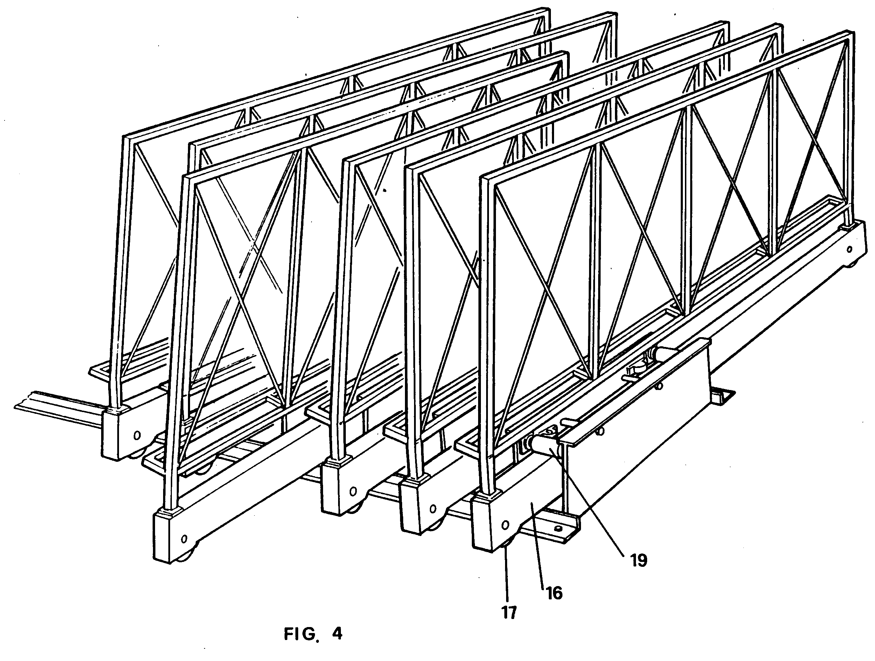

Dans tous les cas, les éléments-supports élémentaires peuvent ainsi être disposés côte à côte à l'intérieur d'une structure à guides multiples, du type de celle illustrée en fig. 4 et peuvent être extraits de celle-ci moyennant déplacement des poutres 16 sur leurs roues de soutien 17 et le long des tambours de guidage 19, de façon à permettre un retrait aisé de l'un des châssis du local de stockage en vue de procèder au chargement ou au déchargement des éléments, chaque élément étant ensuite rentré en place.

Dans les exemples de réalisation illustrés sur le dessin, il va de soi que le déplacement peut être effectué manuellement par un opèrateur, mais il peut aussi être également motorisé, par exemple à l'aide de moteurs électriques qui agissent sur les roues 12, ou au moyen de vérins hydrauliques ou pneumatiques associés aux bâtis élémentaires, ou encore à l'aide de crémaillères portées par lesdits chassis pour coopèrer avec des roues dentées.

## Revendications

1. Elément-support mobile pour locaux de stockage de produits, notamment de forme plane disposés verticalement, comprenant un élément mobile (3, 11, 16) supporté par des roues (4, 12, 17), un bâti (1, 10, 15), supporté par l'élément mobile, orienté verticalement pour soutenir les objets à stocker, et une structure de guidage (5) pour l'élément mobile, caractérisé en ce que l'élément mobile est une poutre (3, 11, 16) et que la structure de guidage est équipée de tambours (6, 13, 14, 18, 19 20) qui maintiennent fermement ladite poutre au cours de ses déplacements.

2. Elément-support mobile suivant la revendication 1, caractérisé en ce que la structure de guidage (5) de l'élément-support comprend uniquement des tambours verticaux (6) prévus fous.

3. Elément-support mobile suivant la revendication 1, caractérisé en ce que la structure de guidage (5) comprend, en plus des tambours verticaux (6, 13, 18), au moins une paire de tambours horizontaux (14, 19, 20).

## Claims

1. Movable support element for product storage units, in particular of flat shape arranged vertically, comprising a movable element (3, 11, 16) supported by wheels (4, 12, 17), a supporting structure (1, 10, 15), supported by the movable element, oriented vertically to support the items to be stored, and a guide structure (5) for the movable element, characterised in that the movable element is a beam (3, 11, 16) and that the guide structure is equipped with cylinders (6, 13, 14, 18, 19, 20) which hold the said beam firmly whilst it is being moved.

2. Movable support element according to claim 1, characterised in that the guide structure (5) of the support element comprises solely vertical cylinders (6) arranged loose.

3. Movable support element according to claim 1, characterised in that the guide structure (5) comprises at least one pair of horizontal cylinders (14, 19, 20) in addition to the vertical cylinders (6, 13, 18).

## Patentansprüche

1. Mobiles Tragelement für Lagerräume, insbesondere für vertikal angeordnete Produkte in flacher Form, enthaltend ein auf Rädern (4, 12, 17) gelagertes mobiles Element (3, 11, 16), einen von dem mobilen Element getragenen vertikal angeordneten Rahmen (1, 10, 15) zur Aufnahme der zu lagernden Gegenstände und eine Führungsstruktur (5) für das mobile Element, dadurch gekennzeichnet, daß das mobile Element ein Träger (3, 11, 16) ist, und daß die Führungsstruktur mit Walzen (6, 13, 14, 18, 19, 20) ausgerüstet ist, die den Träger im Verlaufe seiner Verschiebungen führen.

2. Mobiles Tragelement nach Anspruch 1, dadurch gekennzeichnet, daß die Führungsstruktur (5) des Tragelements nur bewegliche vertikale Walzen (6) besitzt.

3. Mobiles Tragelement nach Anspruch 1, dadurch gekennzeichnet, daß die Führungsstruktur (5) zusätzlich zu den vertikalen Walzen (6, 13, 18) wenigstens ein Paar horizontaler Walzen (14, 19, 20) besitzt.
